# EUROPEAN PATENT SPECIFICATION

(11) **EP 0 480 991 B1**
(45) Date of publication and mention of the grant of the patent: **09.04.1997**
(21) Application number: 90910955.5
(22) Date of filing: 05.07.1990
(51) Int. Cl.: F02M 35/024, B01D 27/04, B01D 46/24

(54) **FILTER DEVICE, PARTICULARLY INTAKE AIR FILTER DEVICE FOR COMBUSTION ENGINES**
FILTERVORRICHTUNG, INSBESONDERE FÜR DIE ANSAUGLUFT VON BRENNKRAFTMASCHINEN
DISPOSITIF DE FILTRAGE, NOTAMMENT DISPOSITIF DE FILTRAGE D'AIR D'ADMISSION POUR DES MOTEURS A COMBUSTION

(30) Priority: 05.07.1989 SE 8902442
(43) Date of publication of application: 22.04.1992
(73) Proprietor: AB VOLVO, 405 08 Göteborg (SE)
(72) Inventor: DEBRUYNE, Christiaan, B-9890 Knesselare (BE)
(74) Representative: Hellbom, Lars Olof
(86) International application number: SE9000482
(87) International publication number: WO9100425

(56) References cited:
- DE-A- 2 739 290
- DE-A- 3 518 076
- US-A- 4 720 292
- DERWENT'S ABSTRACTS No. K03 80 E/30, SU 868 082, publ. week 8230 (GUTMAN AL)
- PATENT ABSTRACTS OF JAPAN, Vol 9, No 187, M401, abstract of JP 60-53658, publ 1985-03-27 (HONDA GIKEN KOGYO K.K.)

## Description

The present invention relates to a filter device for filtering a gaseous medium, comprising a filter housing with an inlet and an outlet for the medium, a replaceable filter element enclosed in the housing and provided between the inlet and the outlet, and a pipe stub coupled to the outlet opening of the housing for coupling to a gas conduit.

In known filter devices of this type for internal combustion engines, the pipe stub connecting the filter housing with the intake conduit of the engine is fixed to the filter housing itself and in this case usually to one end plate of a cylindrical housing, the inlet being arranged in the lateral surface of the cylinder. A filter element with a tubular filter body presses with one end against the end plate surface surrounding the outlet with a seal therebetween which is compressed when the filter body is pressed against the outlet end plate of the housing, as the other end plate in the form of a cover is put in place.

This design has a number of disadvantages. Due to the fact that the filter element must be fitted between the housing end plates, special attention must be paid to the extra dimensions of the filter element and the filter housing. Deviations in both directions can result in leakage. In one case (filter element too short), the seal will not be sufficiently large to seal the gap between the filter end and the housing end plate. In the second case (filter element too long), there is a risk that the seal will be distorted when the filter is installed.

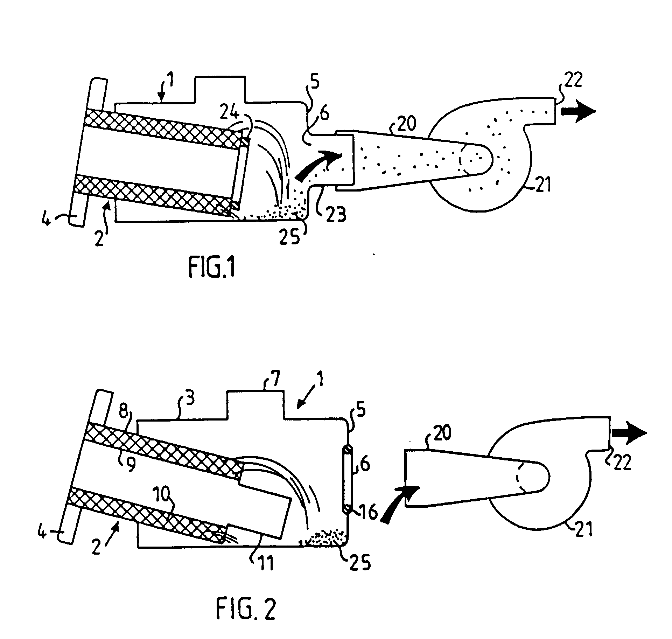

When replacing a filter it is difficult to avoid dirt falling down onto the bottom of the filter housing when the old filter is removed. If the engine is started in connection with service, in which filter replacement is included, before a new filter element has been installed, there is the risk that the dirt in the filter housing will be sucked into the engine, and this will result in substantial shortening of the useful life of the engine, as illustrated in Figure 1.

The purpose of the present invention is to provide a filter device of the type described by way of introduction which avoids the above-mentioned disadvantages by on one hand eliminating the need for narrow tolerances between the filter housing and the filter element and on the other hand preventing dirt in the filter housing from being able to be sucked into the engine, if the engine is started during filter replacement.

This is achieved according to the invention by providing a filter installation according to claim 1.

The design according to the invention requires that the engine intake conduit be uncoupled from the filter pipe stub before the filter element can be removed, and this means that when the element is removed from the filter housing, the connection is broken between the filter housing and the intake conduit. If the engine is started with the filter removed, air will not be sucked from the filter housing but rather directly from the surrounding air into the intake conduit. There is no requirement that the seal between the outlet stub and the housing outlet be very effective, since air which does not pass through the filter but rather leaks between the housing and the pipe stub is not sucked into the engine but rather leaks out into the surrounding air. Consequently, no axial forces are required on the filter for compression of the axial seal to seal off the clean side of the filter. Finally, the filter housing and the filter element can be made with wide tolerances as regards axial dimensions, since the fixing of the pipe stub on the filter element means that these dimensions are no longer critical.

The invention will be described in more detail below with reference to examples shown in the accompanying drawing.
Figure 1 shows a longitudinal section through a schematically represented previously known filter device with a partially removed filter element,
Figure 2 shows a longitudinal section corresponding to Figure 1 through a schematically represented embodiment of a filter device according to the invention,
Figure 3 shows a longitudinal section through the filter device of Figure 2 with a filter element completely inserted, and
Figure 4 shows a longitudinal section through a filter device according to the invention in a slightly modified embodiment.

In Figures 1-4, 1 generally designates a filter housing and 2 generally designates a filter element enclosed in the housing 1. The housing 1 consists of a cylindrical element 3 with end plates 4 and 5, of which end plate 4 forms a cover fixed to the filter element which can be fixed to the cylinder 3, while the other end plate 5 has an outlet opening 6. An inlet 7 extends through the cylinder 3. The filter element 2 comprises a pair of perforated coaxial cylinders 8, 9, with an intermediate filter material 10 of a type which is known per se, e.g. folded cardboard or steel-wool.

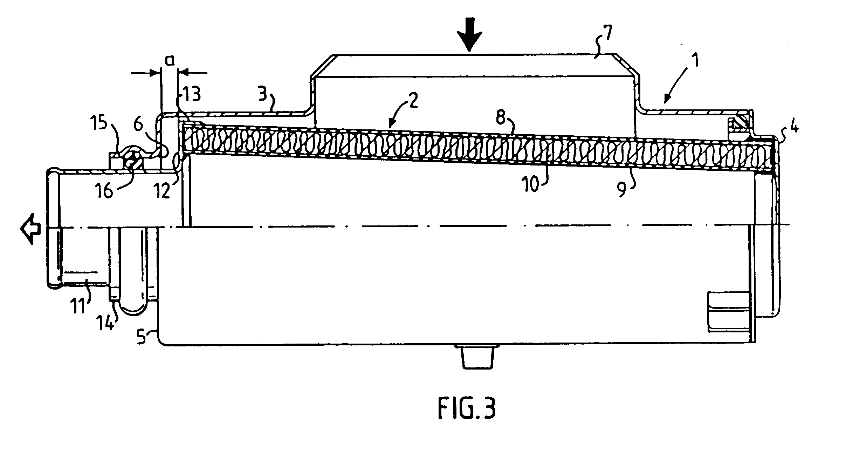

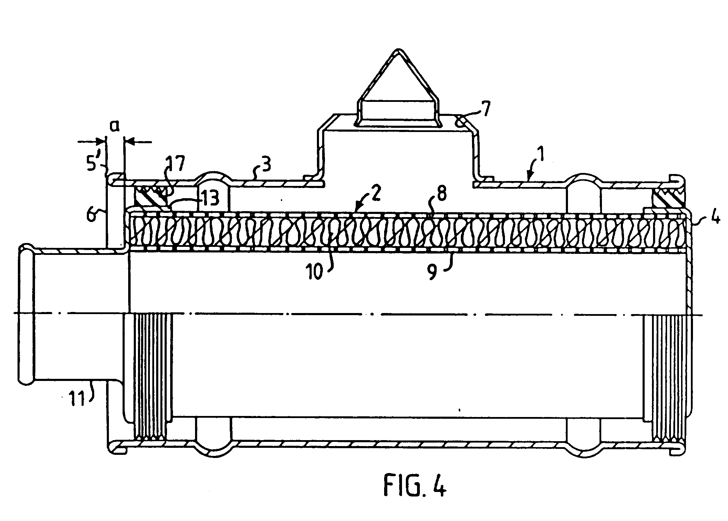

According to the invention, an outlet stub 11 is solidly joined to the filter element 2. The stub 11 (see Figures 3 and 4) is made in one piece with a radial flange 12, from which an axial angular flange 13 extends over the outer perforated cylinder 9 of the filter and is securely joined thereto by, for example, glueing or by force-fitting.

In the embodiment shown in Figure 3, the pipe stub 11 extends through an outlet opening 6, which is surrounded by an axial flange 14 with a groove 15, in which a sealing ring 16 is disposed. The ring 16 seals against the outer lateral surface of the pipe stub 11.

In the embodiment shown in Figure 4, the entire end 5' is open and a seal 17 on the axial flange 13 seals against the inner lateral surface of the housing cylinder 3.

Figure 1 shows a conventional filter housing 1 connected to an intake conduit 20 of a turbo compressor 21 with an outlet 22 to an intake manifold of an internal combustion engine (not shown). In this example, an outlet stub 23 is made in one piece with the housing 1. The Figure illustrates what can happen when the filter element 2 - which is normally pressed against the end plate 5 with a seal 24 therebetween, the sealing capacity of which is of vital importance - is removed by removing the cover 4 from the filter housing 1. Dirt in the form of sand, dust and the like on the outer surface of the filter element tends to fall from the filter surface and end up on the bottom of the housing, as illustrated at 25. If the engine should then be started, the dirt would be sucked directly into the engine cylinders, thereby drastically increasing engine wear.

Figure 2 shows in a corresponding manner what happens when a filter element 2 with an outlet stub 11 fixed to the element 2 instead of to the housing 1, is removed from the housing. As in the previous example, dirt tends to fall from the filter surface and end up on the bottom of the housing 1, but since the stub 11, which must first be uncoupled from the intake conduit 20, accompanies the filter as it is removed, the connection is broken between the engine and the filter housing 1. This means that surrounding air and not air in the filter housing will be sucked into the engine should it be started.

An additional essential advantage, which is revealed clearly in Figures 3 and 4, is that the axial fit between the filter and the housing is not critical to preventing unfiltered air from leaking into the engine. In the embodiments shown, for example, there is a play "a" between the radial flange 12 of the filter and the housing end 5. The filter could in principal be longer by the distance "a" or that much shorter without affecting its performance.

## Claims

1. Filter installation comprising a gas conduit (20) and a filter device for filtering a gaseous medium, said device comprising a housing (1) with an inlet (7) and an outlet (6) for the medium and a replaceable filter element (2) arranged in the housing between the inlet and the outlet and having a pipe stub (11) which is solidly joined to the filter element, protrudes through the housing outlet and is connected to the gas conduit so that, when the filter element is removed from the housing, the pipe stub is removed at the same time, wherein the gas conduit (20) has an end facing the housing (1) which is located at such a distance from the housing outlet (6) that, when the filter element (2) is removed from the housing, the pipe stub (11) is leaving an open space between the housing outlet and said conduit end which allows gaseous medium outside the filter housing to be sucked into the conduit, so as to prevent particles (25) inside the housing from being sucked into the conduit.

2. Filter installation according to Claim 1, characterized in that the filter housing (1) and the filter element (2) are cylindrical, that the inlet (7) is arranged in a lateral surface of the housing while the outlet (6) is arranged in an end plate (5) closing one end of the housing and that the outlet stub (11) of the filter extends through the outlet (6) in said end plate.

3. Filter installation according to Claim 2, characterized in that said end plate (5) of the housing is made with an opening (6) adapted to the pipe stub (11), and that a sealing ring (16) is arranged between the edge of the opening and the outlet stub of the filter element.

4. Filter installation according to Claim 2, characterized in that the pipe stub (11) is made with a flange portion (13) extending over the outer lateral surface of the filter element, so that a sealing ring (17) is arranged between said flange portion and the inner lateral surface of the housing (1).

5. Filter installation according to Claim 4, characterized in that the entire end (5') of the filter housing (1) is open.

## Patentansprüche

1. Filtereinrichtung mit einem Gaskanal (20) und einer Filtervorrichtung zum Filtern eines gasförmigen Mediums, wobei die Vorrichtung ein Gehäuse (1) mit einem Einlaß (7) und einem Auslaß (6) für das Medium und ein austauschbares Filterelement (2) aufweist, das in dem Gehäuse zwischen dem Einlaß und dem Auslaß angeordnet ist und einen Rohrstummel (11) aufweist, der fest mit dem Filterelement verbunden ist, durch den Gehäuseauslaß vorsteht und mit dem Gaskanal derart verbunden ist, daß, wenn das Filterelement von dem Gehäuse entfernt wird, der Rohrstummel gleichzeitig entfernt wird, wobei der Gaskanal (20) ein Ende aufweist, das zu dem Gehäuse (1) gerichtet ist und mit einem derartigen Abstand von dem Gehäuseauslaß (6) angeordnet ist, daß, wenn das Filterelement (2) von dem Gehäuse entnommen wird, der Rohrstummel (11) einen offenen Raum zwischen dem Gehäuseauslaß und dem Kanalende beläßt, der ermöglicht, daß gasförmiges Medium außerhalb des Filtergehäuses in den Kanal gesaugt wird, so daß verhindert wird, daß Teilchen (25) innerhalb des Gehäuses in den Kanal gesaugt werden.

2. Filtereinrichtung nach Anspruch 1,
dadurch **gekennzeichnet**, daß das Filtergehäuse (1) und das Filterelement (2) zylindrisch sind, und daß der Einlaß (7) in einer Seitenfläche des Gehäuses angeordnet ist, während der Auslaß (6) in einer Endplatte (5) angeordnet ist, die ein Ende des Gehäuses verschließt, und daß sich der Auslaßstummel (11) des Filters durch den Auslaß (6) in der Endplatte erstreckt.

3. Filtereinrichtung nach Anspruch 2,
dadurch **gekennzeichnet**, daß die Endplatte (5) des Gehäuses mit einer Öffnung (6) ausgebildet ist, die an den Rohrstummel (11) angepaßt ausgebildet ist, und daß ein Dichtungsring (16) zwischen dem Rand der Öffnung und dem Auslaßstummel des Filterelements angeordnet ist.

4. Filtereinrichtung nach Anspruch 2,
dadurch **gekennzeichnet**, daß der Rohrstummel (11) mit einem Flanschabschnitt (13) versehen ist, der sich über die äußere Seitenfläche des Filterelements erstreckt, so daß ein Dichtungsring (17) zwischen dem Flanschabschnitt und der inneren Seitenfläche des Gehäuses (1) angeordnet ist.

5. Filtereinrichtung nach Anspruch 4,
dadurch **gekennzeichnet**, daß das gesamte Ende (5') des Filtergehäuses (1) offen ist.

## Revendications

1. Installation de filtrage comprenant une conduite (20) de gaz et un dispositif de filtrage pour filtrer un milieu gazeux, ledit dispositif comprenant un boîtier (1) avec une entrée (7) et une sortie (6) pour le milieu et un élément de filtre interchangeable (2) disposé dans le boîtier entre l'entrée et la sortie et comportant un tronçon de tube (11) qui est fermement fixé à l'élément de filtre, fait saillie à travers la sortie du boîtier et est connecté à la conduite de gaz de sorte que, quand l'élément de filtre est enlevé du boîtier, le tronçon de tube soit enlevé simultanément, dans lequel la conduite (20) de gaz possède une extrémité faisant face au boîtier (1) qui est à une distance de la sortie (6) du boîtier telle que, lorsque l'élément de filtre est enlevé du boîtier, le tronçon de tube (11) laisse un espace libre entre la sortie du boîtier et ladite extrémité de la conduite ce qui permet au milieu gazeux qui est à l'extérieur du boîtier de filtre d'être aspiré dans la conduite, afin d'éviter que les particules (25) qui sont à l'intérieur du boîtier soient aspirées dans la conduite.

2. Installation de filtrage selon la revendication 1, caractérisée en ce que le boîtier (1) de filtre et l'élément (2) de filtre sont cylindriques, l'entrée (7) est disposée dans une surface latérale du boîtier tandis que la sortie (6) est disposée dans une plaque (5) d'extrémité fermant une extrémité du boîtier, et le tronçon (11) de sortie du filtre s'étend à travers la sortie (6) dans ladite plaque d'extrémité.

3. Installation de filtrage selon la revendication 2, caractérisée en ce que ladite plaque (5) d'extrémité du boîtier présente une ouverture (6) adaptée au tronçon (11) de tube, et un joint annulaire d'étanchéité (16) est disposé entre le bord de l'ouverture et le tronçon de sortie de l'élément de filtre.

4. Installation de filtrage selon la revendication 2, caractérisée en ce que le tronçon de tube (11) est muni d'une partie formant collerette (13) s'étendant par-dessus la surface latérale extérieure de l'élément de filtre, de sorte qu'un joint annulaire d'étanchéité (17) soit disposé entre ladite partie formant collerette et la surface latérale interne du boîtier (1).

5. Installation de filtrage selon la revendication 4, caractérisée en ce que la totalité de l'extrémité (5) du boîtier de filtre (1) est ouverte.
